# EUROPEAN PATENT SPECIFICATION

(11) **EP 1 181 833 B1**
(45) Date of publication and mention of the grant of the patent: **10.10.2007**
(21) Application number: 00929601.3
(22) Date of filing: 31.05.2000
(51) Int. Cl.: H04Q 7/22, H04L 12/58

(54) **A METHOD FOR IMPLEMENTING A CHATLINE OR A NOTICEBOARD SERVICE IN A MOBILE TELEPHONE NETWORK**
VERFAHREN ZUR IMPLEMENTIERUNG EINER UNTERHALTUNGSLEITUNG ODER EINES NOTIZBRETTDIENSTES IN EINEM MOBILEN TELEFONNETZ
PROCEDE D'IMPLEMENTATION D'UNE LIGNE DE CONVERSATION OU D'UN PANNEAU D'AFFICHAGE DANS UN RESEAU TELEPHONIQUE MOBILE

(30) Priority: 03.06.1999 FI 991273
(43) Date of publication of application: 27.02.2002
(73) Proprietor: Elisa Oyj, 00520 Helsinki (FI)
(72) Inventor: JÄRVINEN, Ville, FIN-00350 Helsinki (FI); FLINKKILÄ, Timo, FIN-00700 Helsinki (FI)
(74) Representative: Lipsanen, Jari Seppo Einari
(86) International application number: PCT/FI2000/000491
(87) International publication number: WO 2000/076231

(56) References cited:
- WO-A1-99/26431
- WO-A1-99/34628
- WO-A2-99/63729

## Description

The present invention relates to a method for implementing a communications service, according to the preamble of Claim 1

The communications service may be, for example, a chat line or a notice-board service.

Chat lines are implemented in Internet and telephone applications. In GSM and other wireless telephone systems (e.g. UMTS) the only known solution is a CHAT BOX service, in which users can communicate mutually by means of short text messages. In the Internet, there are services, in which users can post their own notices, to which others can respond. Notices are posted using the World Wide Web, with responses being primarily made by e-mail. The Internet also has websites, where text messages can be used to communicate with other users in real-time.

Another traditional solution is the announcements pages of various newspapers.

The CHAT BOX services of wireless telephone networks have the drawback that communication is limited to short text messages. In addition, in such systems, notices cannot be posted to a specific area. Usability problems also arise from having to write various commands as short text messages.

Malicious users, who do not abide by the rules laid down by the service provider, are another drawback of the above solutions. It is impossible to exclude such users, because user identities can be easily falsified in the Internet. Thus, a few problem users can spoil an entire service, as it is impossible to exclude them. In addition, in such services, it is possible to impersonate another user and thus harm others.

Yet another drawback is that, to use such services, users requires a computer and an Internet connection. This means that the service is only available at certain times and places, unless the user has a laptop computer at their disposal, which is, however, relatively uncommon.

In the case of printed publications, there is the drawback of the delay between placing an announcement and its being read. Typically, this delay is at least almost one day.

Reading the announcement, responding to it, and the reception of the response by the person placing the announcement can also take some time, typically a few days.

Document WO-A-99 26431 discloses a conventional method for transmitting a message to a mobile phone according to its location.

The invention is intended to eliminate the defects of the state of the art referred to above and for this purpose create an entirely new type of method for implementing a communications service.

The invention is based on the fact that, for example, GSM or other short text messages are sent by attaching the sender's calling-party number to the message, the system using the calling-party number to identify the user. Notices are sent as short text messages to a certain number, where an SMS server routes the incoming short text messages to a separate database. The system then forwards the short text message from the database to those logged-on users of the system, who, according to the logic, are located in a selected destination area comprising one or more cells of the mobile telephone network.

More specifically, the method according to the invention is characterized by what is stated in the characterizing section of Claim 1.

Considerable advantages are gained with the aid of the invention.

Users can exploit the method according to the invention, without constraints of time or place. Users can communicate with others who are logged on as users of the system, whenever their terminal device is in the operating area of the mobile telephone network.

The method according to the invention also allows the service provider to exclude users from the system, if they do not abide by the rules laid down by the service provider.

The method according to the invention also permits completely anonymous communication with other system users, with no danger in the service of the user's own identity being revealed. In connection with the invention, it is in practice extremely difficult to falsify an identity. The method can also be used to ensure that messages always go to the correct recipient.

In the following, the invention is examined in greater detail with the aid of examples and with reference to the accompanying drawing.

Figure I shows one method and system according to the invention.

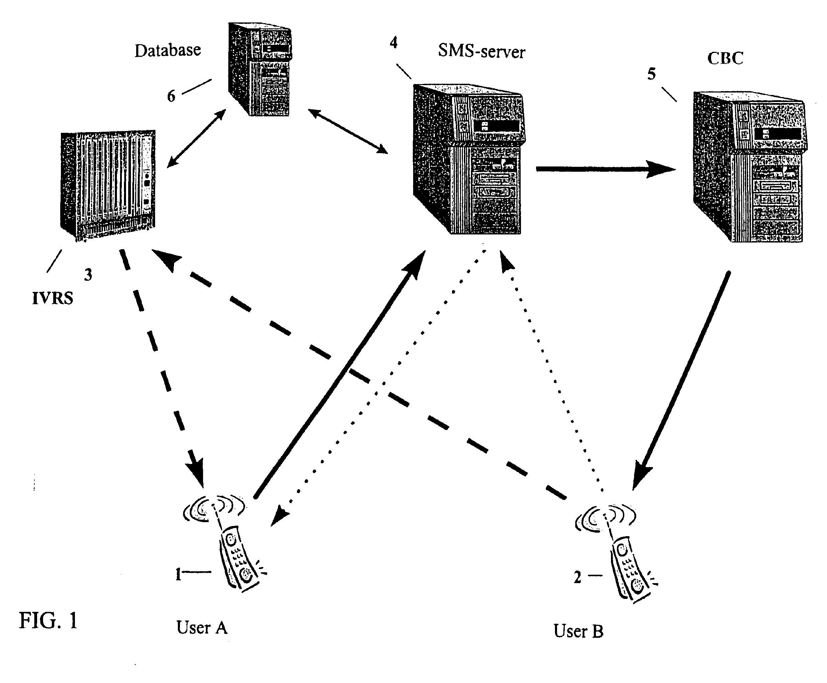

According to Figure 1, user 1 boots the CHAT2000 program in the terminal device. In a conventional mobile telephone, this program can be implemented using, for instance, the SIM Application Tool Kit, WAP, or in some corresponding manner. In the case of a terminal device similar to the Nokia Communicator, the CHAT2000 program can be implemented using some traditional programming language. User 1 writes the desired notice using the CHAT2000 program and sends it as a short text message to SMS server 4. This short text message contains the user's notice and, depending on the implementation, possibly a command attached to it, which allows SMS centre 4 to identify the short text message as a notice.

The command possibly attached to the short text message can be, for example, in the form CHAT.XXX.ARGUMENTS, in which XXX is the command of the CHAT2000 system, with ARGUMENTS being used to provide additional information required by the command. Patent application FI981620 provides a more detailed disclosure of this kind of technique, which can be used in connection with the invention.

In a mobile telephone network, a wireless telephone network cell identifier for the area to which the message is to be sent, is also added to the short text message. The calling-party number attached to the short text message is used for user identification.

SMS server 4 issues the user with a CHAT2000 ID, i.e. a communications service user identifier, if the user does not already have one. SMS server 4 then makes an entry in database 6 consisting of the notice, the CHAT2000 ID and calling-party number of the user posting the notice, and the identifier of the cell through which the short text message was sent. Next, SMS server 4 forwards the notice to Cell Broadcast Centre (CBC) 5, which transmits the notice as a cell broadcast to a predefined area. The predefined area is selected according to the logic and comprises one or more cells of the mobile telephone network. The destination area can be defined, for example, according to the target-area selection entered by the sender of the message, but usually the destination area selection is set to include the cell used to send the message.

Thus, the destination area usually comprises a group of the wireless telephone network cells closest to the sender, defined as a single area.

The second user 2 boots the CHAT2000 program in the terminal device, after which the program is sent to all the notices sent as cell broadcasts to the wireless telephone network cell in question. User 2 can now, if they wish, respond to the notice, either with a short text message or by phoning.

When using a short text message to respond, user 2 writes their response and sends it as a short text message to user 1, who sent the original message. In this case, the responding user 2 selects the recipient's CHAT2000 ID as the destination number for the message. When it receives the message, SMS centre 4 checks the database to find the actual telephone number corresponding to the recipient's CHAT2000 ID, and routes the short text message to that number.

Response can also be arranged so that user 2 includes the CHAT2000 ID of the intended recipient in a short text message and sends the response as a short text message to a general response number specified for the service. SMS server 4 routes the response number's incoming short text messages to the CHAT2000 system's database 6, which stores the telephone numbers corresponding to the CHAT2000 IDs. Once it has found the telephone number corresponding to the CHAT2000 ID, the SMS server sends the short text message to the desired recipient.

If user 2 wants to make an anonymous call to the person posting the notice, i.e. user 1, user 2 can call a number according to user 1's CHAT2000 ID, when the call is connected to Interactive Voice Response System (IVRS) 3. IVRS 3 checks database 6 to find the calling-party number corresponding to the CHAT2000 ID, then connects the call to user 1's telephone, with the CHAT2000 ID of user 2 being displayed to user 1 as the calling-party number.

Thus, in one method according to the invention, the following operations are carried out:
- A message is received from a first customer 1, addressed to at least one second customer 2. This message may be, e.g., a GSM short text message.
- Customer 1 of the communications service, who has sent the message, is identified, when:
   - the user code of customer 1 who has sent the received message is attached to the message,
   - a message-specific destination area, comprising one or more cells of the mobile telephone network, is defined for each message to be forwarded, and
   - the message and the attached user identifier is forwarded to at least one second customer 2 of the communications service, who is in the destination area defined for the message being sent.

In a method according to one preferred embodiment, the following additional operations are carried out:
- When a customer boots the program intended to operate the communications service, in a terminal device, the customer is sent all the notices intended for the destination area where the recipient customer is located.
- A customer who has received a message has a possibility to respond anonymously to the sender. Response can take place, for example, by writing a short text message, when the person receiving the short text message, i.e. the sender of the original message, receives a short text message on their terminal device, with the communications service user identifier of the recipient of the message displayed as the sender's number.

In one preferred embodiment, in which the customer receiving the message can call the customer sending the message, the following operations are carried out:
- When the customer receiving the message calls the number according to the communications service user identifier of the sender of the message, the call is connected to an IVRS system, which determines the telephone number of the person with the user identifier in question. Having found the relevant telephone number, the IVRS connects the call to the sender of the message, and displays the communications service user identifier of the original recipient of the message on the mobile phone of the person receiving the call.

## Claims

1. A method for transmitting a message in a communications service operating by means of a mobile telephone network, in which service, a customer-specific user identifier, intended to conceal the real identity of the customer, is allocated to each communications service customer (1, 2), and, in which method:
- a message addressed to at least one other customer (2) is received from a first customer (1),
- the communications service customer who has sent the message is identified,
- the user identifier of the customer who has sent the received message is attached to the message, and
- the message with the attached user identifier is forwarded to at least one other customer of the communications service,
**characterized in that**, in the method:
- a message-specific destination area, comprising one or more cells of the mobile telephone network, is defined for each message to be forwarded, and
- the message and the attached user identifier are sent to at least one recipient customer located in the destination area.

2. A method according to Claim 1, **characterized in that**
- the identifier of the mobile telephone network cell used when sending the message of the first customer (1) is recorded, and
- the destination area is defined on the basis of the mobile telephone network cell used to send the message.

3. A method according to Claim 1 or 2, **characterized in that**
- a call-connection request, directed to the possessor of the user identifier attached to a message received by at least one other customer (2), is received, and
- the call is connected to the mobile telephone of the first customer (1), who possesses the user identifier.

4. A method according to Claim 3, **characterized in that**, when connecting the call to the first customer (1), the user identifier of the other customer (2), who is making the call, is transmitted to the first customer, along with the call.

5. A method according to one of Claims 1 - 4, **characterized in that**, when the call is being connected to the first customer (1), the destination telephone number is determined in an IVRS system (3).

6. A method according to one of Claims 1 - 5, **characterized in that** the communications service is a chat line.

7. A method according to one of Claims 1-5, **characterized in that** the communications service is an notice-board service.

## Patentansprüche

1. Verfahren zum Übertragen einer Meldung in einem Kommunikationsdienst, der durch ein Mobiltelefonnetz betrieben wird, wobei durch den Dienst jedem Kommunikationsdienstkunden (1, 2) eine kundenspezifische Benutzeridentifizierung zugewiesen wird, die dazu vorgesehen ist, die reale Identität des Kunden geheimzuhalten, wobei im Verfahren:
- eine an mindestens einen anderen Kunden (2) adressierte Meldung von einem ersten Kunden (1) empfangen wird;
- der Kommunikationsdienstkunde, der die Meldung abgeschickt hat, identifiziert wird;
- die Benutzeridentifizierung des Kunden, der die empfangene Meldung abgeschickt hat, an die Meldung angeheftet wird; und
- die Meldung mit der angehefteten Benutzeridentifizierung an mindestens einen anderen Kunden des Kommunikationsdienstes weitergeleitet wird;
**dadurch gekennzeichnet, dass** im Verfahren:
- für jede weiterzuleitende Meldung ein meldungsspezifischer Zielbereich definiert wird, der eine oder mehrere Zellen des Mobiltelefonnetzes enthält; und
- die Meldung und die angeheftete Benutzeridentifizierung an mindestens einen sich im Zielbereich befindenden Empfängerkunden übertragen werden.

2. Verfahren nach Anspruch 1, **dadurch gekennzeichnet, dass**
- die Identifizierung der Mobiltelefonnetzzelle, die verwendet wird, wenn die Meldung des ersten Kunden (1) übertragen wird, aufgezeichnet wird; und
- der zielbereich auf der Basis der zum Übertragen der Meldung verwendeten Mobiltelefonnetzzelle definiert wird.

3. Verfahren nach Anspruch 1 oder 2, **dadurch gekennzeichnet, dass**
- eine Rufverbindungsanforderung empfangen wird, die an den Besitzer der Benutzeridentifizierung gerichtet ist, die einer Meldung angeheftet ist, die durch mindestens einen anderen Kunden (2) empfangen wird; und
- der Ruf mit dem Mobiltelefon des ersten Kunden (1) verbunden wird, der die Benutzeridentifizierung besitzt.

4. Verfahren nach Anspruch 3, **dadurch gekennzeichnet, dass**, wenn der Ruf mit dem ersten Kunden (1) verbunden wird, die Benutzeridentifizierung des anderen Kunden (2), der den Ruf erzeugt hat, zusammen mit dem Ruf zum ersten Kunden übertragen wird.

5. Verfahren nach einem der Ansprüche 1 bis 4, **dadurch gekennzeichnet, dass**, wenn der Ruf mit dem ersten Kunden (1) verbunden wird, die Zieltelefonnummer in einem IVRS-System (3) bestimmt wird.

6. Verfahren nach einem der Ansprüche 1 bis 5, **dadurch gekennzeichnet, dass** der Kommunikationsdienst eine Chatline ist.

7. Verfahren nach einem der Ansprüche 1 bis 5, **dadurch gekennzeichnet, dass** der Kommunikationsdienst ein "Schwarzes Brett"-Dienst ist.

## Revendications

1. Procédé de transmission d'un message dans un service de communication fonctionnant à l'aide d'un réseau téléphonique mobile, service dans lequel un identificateur d'utilisateur spécifique au client, conçu pour masquer l'identité réelle du client, est affecté à chaque client du service de communication (1, 2) et procédé au cours duquel :
- un message adressé à au moins un autre client (2) provient du premier client (1) ;
- le client du service de communication qui a envoyé le message est identifié ;
- -l'identificateur d'utilisateur du client qui a envoyé le message reçu est joint au message, et
- le message avec l'identificateur d'utilisateur joint est transféré vers au moins un autre client du service de communication,
**caractérisé en ce que**, au cours du procédé :
une zone de destination spécifique au message comprenant une ou plusieurs cellules du réseau téléphonique mobile est définie pour chaque message à transférer, et
le message ainsi que l'identificateur d'utilisateur joint sont envoyés vers au moins un client destinataire compris dans la zone de destination.

2. Procédé selon la revendication 1, **caractérisé en ce que**
l'identificateur de la cellule du réseau téléphonique mobile utilisée lors de l'envoi du message du premier client (1) est enregistré, et
la zone de destination est définie sur la base de la cellule du réseau téléphonique mobile utilisée pour envoyer le message.

3. Procédé selon la revendication 1 ou 2, **caractérisé en ce que** :
une requête de connexion d'appel dirigée vers le processeur de l'identificateur d'utilisateur joint à un message reçu par au moins un autre client (2) est reçue, et
l'appel est relié au réseau téléphonique mobile du premier client (1) qui possède l'identificateur d'utilisateur.

4. Procédé selon la revendication 3, **caractérisé en ce que**, lors de la connexion de l'appel au premier client (1), l'identificateur d'utilisateur de l'autre client (2) qui émet l'appel est transmis au premier client en même temps que l'appel.

5. Procédé selon l'une des revendications 1 à 4, **caractérisé en ce que**, lorsque l'appel est relié au premier client (1), le numéro de téléphone du destinataire est déterminé dans un système IVRS (3).

6. Procédé selon l'une des revendications 1 à 5, **caractérisé en ce que** le service de communication est une ligne de conversation.

7. Procédé selon l'une des revendications 1 à 5, **caractérisé en ce que** le service de communication est un service de panneau d'affichage.
